# EUROPEAN PATENT APPLICATION

(11) **EP 1 541 812 A2**
(43) Date of publication of application: **15.06.2005**
(21) Application number: 04027719.6
(22) Date of filing: 23.11.2004
(51) Int. Cl.: F01L 1/02

(54) **A cassette for securing shipping and assembly of a camshaft drive and timing system**

(30) Priority: 11.12.2003 US 732976
(71) Applicant: BorgWarner Inc., Auburn Hills, MI 48326-2872 (US)
(72) Inventor: Markley, George L., Montour Falls New York 14865 (US); Watson, Stephen P., Freeville New York 13068 (US)
(74) Representative: Petruzziello, Aldo

(57) **Abstract**

A cassette (120) for a plurality of components for a cam drive and timing system for an engine the components comprising a guide (102) and a tensioner attached to a tensioner bracket, a chain (116), a camshaft sprocket (118), and a crankshaft sprocket (114). The cassette (120) is comprised of a body defining clearance holes (130) and shoulder guides (124,126,134) for placement of the camshaft sprocket (118), the crankshaft sprocket (118) and the chain (116); and at least one fastener engaging the body of the cassette (120) to the tensioner bracket, such that when the body of the cassette (120) is engaged to the tensioner (108), the chain (116) runs around the camshaft sprocket (118) and the crankshaft sprocket (118), and the guide and the tensioner (108) are positioned relating to the chain (116) in the same relationship and position as the components are installed on the engine, all components are pivotally placed for installation on the engine.

## Description

### BACKGROUND OF THE INVENTION

### FIELD OF THE INVENTION

The invention pertains to the field of assembly aids. More particularly, the invention pertains to an assembly aid for the shipping and assembly of a camshaft driving system.

### DESCRIPTION OF RELATED ART

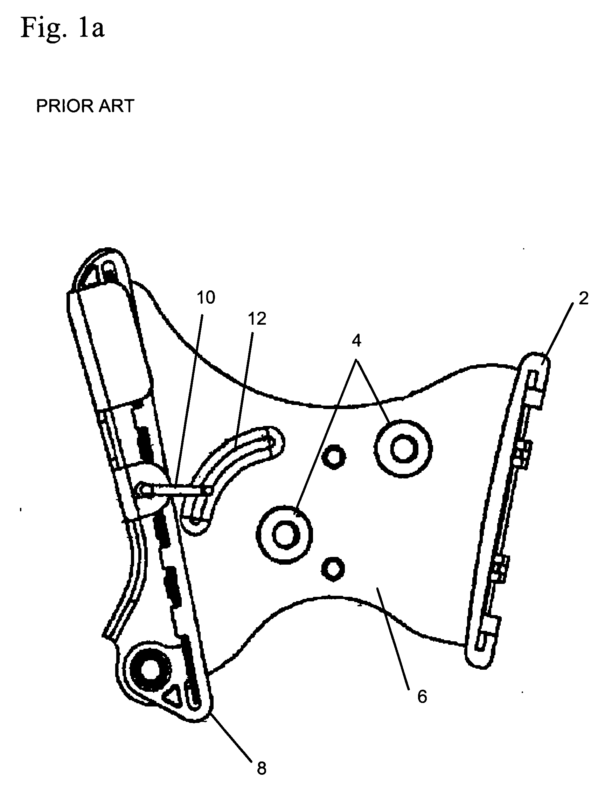

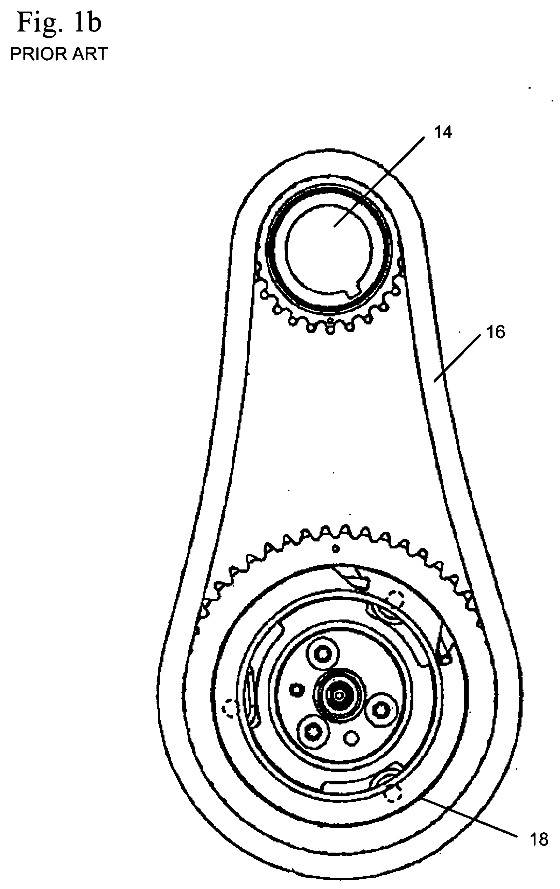

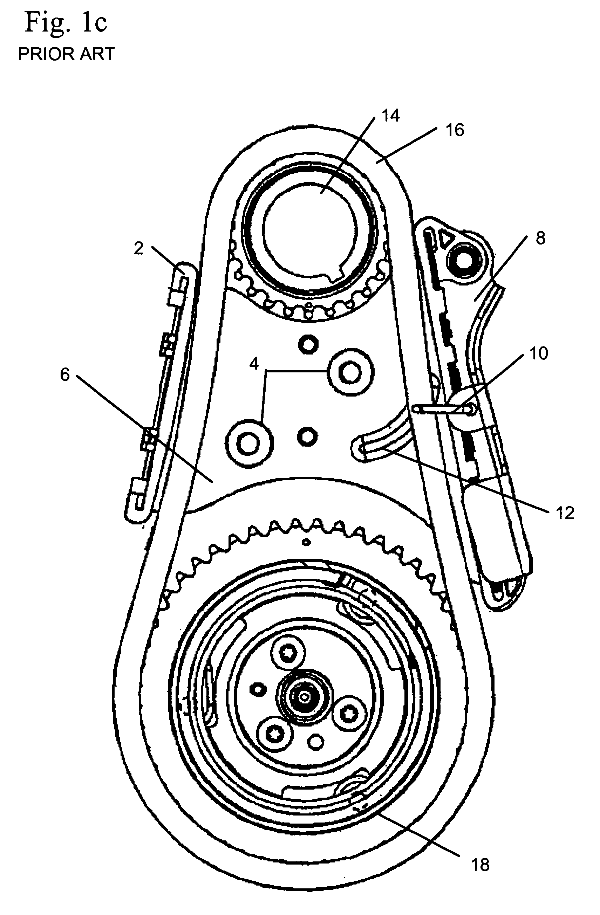

The components of the cam drive and timing system are often assembled onto the engine block individually or as subassemblies. One subassembly may be a chain 16 and two sprockets, camshaft 18, and crankshaft 14 oriented in the correct timing, as shown in Figure 1b and another subassembly may be a tensioner subassembly comprising a bracket 6 having two stand-off threaded bosses 4 for attaching to the engine block, a tensioner arm 8, a snubber 2, and a pin 10 for keeping the tensioner from pivoting as shown in Figure 1a.

In attaching the above subassemblies to the engine block, the tensioner subassembly is placed onto the engine first. Next, the chain is wrapped around sprockets, cam 18 and crank 14, which are properly oriented relative to each other for the correct timing and placed on their respective shafts. Except the chain 16 doesn't have enough slack to allow the sprockets to engage their shafts if the tensioner subassembly is secured to the engine block. If the tensioner subassembly is not secured to the engine block, and moved toward the crankshaft 14, a sufficient amount of slack in the chain may be gained. However, since the cam sprocket 18 and the crank sprocket 14 engage their respective shafts simultaneously, an assembler must keep a hand on each of the sprockets, leaving the assembler shorthanded to adjust the chain and manage the unsecured tensioner subassembly.

Solutions to this problem are discussed in US 4,607,601, 5,193,498, 6,238,311, and JP2001208153A. US 4,607,601 discloses a detachable timing gear cassette unit, which prior to mounting to the engine is attached to a gage which permits the presetting of the timing while the chain tensioner is maintained in a condition where tension is not exerted on the chain. When the timing gear cassette is assembled with the engine on the assembly line, the cassette is positioned with the gage in position on the end portion of the crankshaft, camshaft, and the injection pumpshaft, which were all previously oriented with respect to one other. The gage is then removed and then the sprockets corresponding to the crankshaft, camshaft, and injection pumpshaft are attached to their corresponding shafts. Plugs are mounted to seal any orifices and the timing chain is then placed under tension.

US 5,193,498 discloses a three part assembly used to install a tensioner comprising a mounting plate, a gasket, and a tensioner housing. The three parts are temporarily fastened together by a single rivet. The rivet allows the parts to be rotated relative to each other during installation. The temporary fastening of the three parts allows the assembly to be shipped together and reduce any damage that can incur to the gasket. Lastly, the temporary fastening of the three parts allows the installer to only have to use one hand.

US 6,238,311 discloses a chain tensioner assembly that includes a blade spring interlocked with a shoe. The shoe has slots for receiving the blade spring. One end of the shoe has a protruding portion and the other end has a cylindrical hollow sleeve. The assembled shoe and spring are pivotally mounted to a bracket. The bracket has a tab with a notch in alignment with the hollow sleeve. A removable pin engages the notch in the bracket and passes through the hollow sleeve to secure and prevent the tensioner arm from pivoting when the assembly is shipped and installed onto the engine block.

JP2001208153A discloses a hydraulic automatic tensioner in which all of the components are made to reside on a single cassette.

### SUMMARY OF THE INVENTION

A cassette for a plurality of components for a cam drive and timing system for an engine the components comprising a guide and a tensioner attached to a tensioner bracket, a chain, a camshaft sprocket, and a crankshaft sprocket. The cassette is comprised of a body defining clearance holes and shoulder guides for placement of the camshaft sprocket, the crankshaft sprocket, and the chain; and at least one fastener engaging the body of the cassette to the tensioner bracket, such that when the body of the cassette is engaged to the tensioner, the chain runs around the camshaft sprocket and the crankshaft sprocket, and the guide and the tensioner are positioned relating to the chain in the same relationship and position as the components are installed on the engine, all components are pivotally placed for installation on the engine.

A cassette is also used to ship and install the plurality of components for a cam drive and timing system for an engine the components comprising a guide and a tensioner attached to a tensioner bracket, a chain, a camshaft sprocket, and a crankshaft sprocket. The first step is placing the components for the cam drive and timing system for the engine onto a cassette. The next step is to ship the cassette with the components for the cam drive and timing system and the last step is to install the components for the cam drive and timing system using the cassette.

### BRIEF DESCRIPTION OF THE DRAWINGS

Fig. 1a-1c show schematics of prior art installation of a cam drive and timing system.
Fig. 2 shows a front view of a cassette used in installation, shipping, and storage of a camshaft drive and timing system.
Fig. 3 shows a perspective view of the cassette.
Fig. 4 shows a front view of the cassette and camshaft drive and timing system in the clamped shipping position.
Fig. 5 shows a front view of the cassette and camshaft drive and timing system in the mounting position.
Fig. 6 shows a cross section of Figure 4.

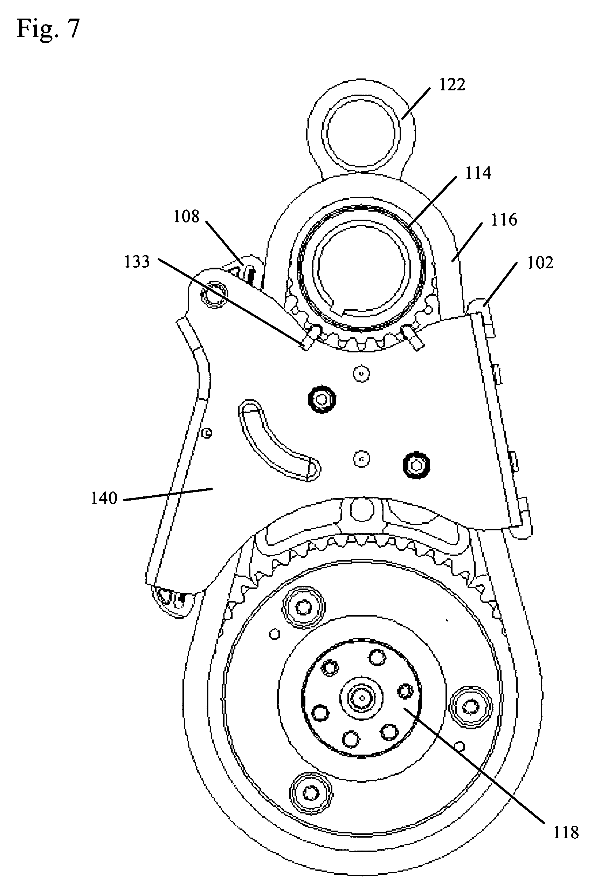

Fig. 7 shows a back view of the cassette.
Fig. 8 shows a perspective view of an alternative cassette.
Fig. 9 shows a front view of the alternative cassette.
Fig. 10 shows a back view of the alternative cassette.
Fig. 11 shows a cross section of Figure 10.
Fig. 12 shows stacking of two cassettes for shipment.

### DETAILED DESCRIPTION OF THE INVENTION

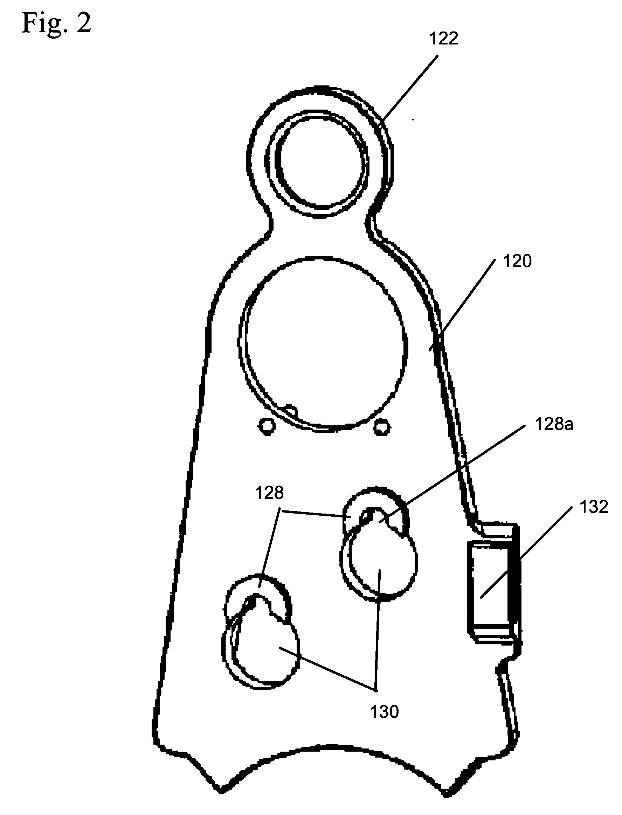

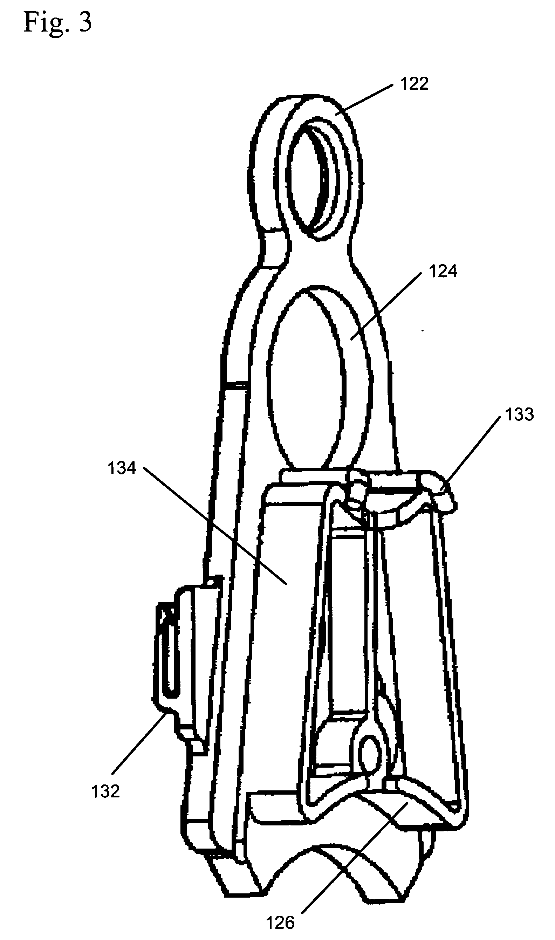

Figures 2 and 3 show the front and back of a cassette 120 used to secure a tensioner 108, guide 102, tensioner bracket 140, two sprockets, the camshaft 118 and crankshaft 114, and a chain 116 in a timed relationship for placement on the engine. The cassette 120 contains shoulder guides 124, 126, 134 for the crankshaft sprocket 114, the camshaft sprocket 118, and the chain 116 respectively, making each of the components easier to assemble onto the cassette. The cassette 120 also has two holes 130 slightly off center, which provide clearance for fasteners 138. The clearance holes 130 having a locking slot 128a and raised bosses 128. Hooks 133 are provided on the back of the cassette 120 and are placed between adjacent crank sprocket teeth to aid in securing and keeping the sprocket in its timed position and keeping tensioner bracket 140 adjacent to the cassette. The cassette further contains a loop 122, which is used for storage, shipping, and handling purposes.

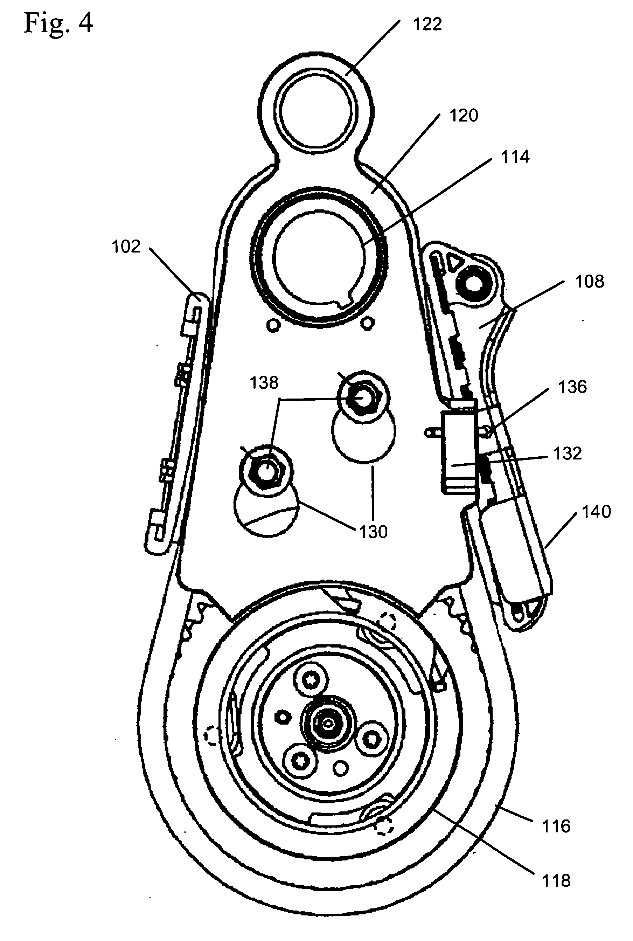

Figure 4 shows the cassette 120 and associated components in the clamped shipping position. In this position, the crankshaft sprocket 114, camshaft sprocket 118, and chain 116 are all in a fixed position that is consistent with the correct timing needed. The tensioner 108 is locked to the tensioner bracket by locking pin 136, keeping the tensioner arm out of the way during assembly. The cassette 120 is clamped to tensioner bracket 140 at bosses 128 by fasteners 138, which position the tensioner bracket 140 so that the tensioner 108 and snubber 102 have maximum clearance to the chain 116. The end of the locking pin 136 is received and secured to cassette 120 by integral catch 132 until after the sprockets and the tensioner are secured to the engine. Once the sprockets and tensioner are secured to the engine, the locking pin 136 is pulled from the tensioner bracket 140 releasing the tensioner 108 to engage and tension chain 116 when the cassette is in the mounting position and is removed axially toward the viewer.

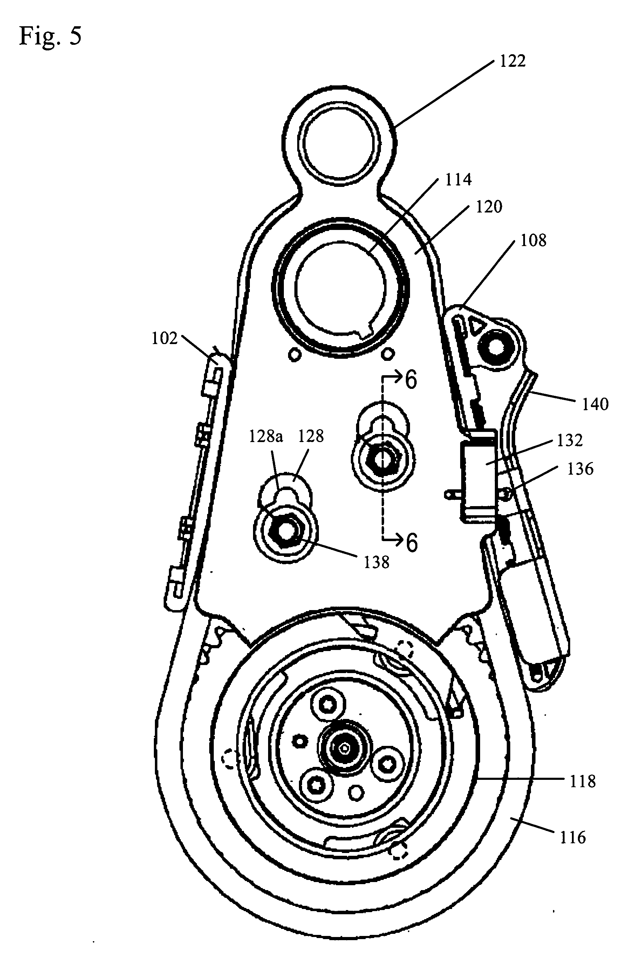

Figure 5 shows cassette 120 and associated components in the mounting position. The tensioner bracket 140 and its components remain locked in position by pin 136 as the tensioner bracket 140 is unclamped by loosening fasteners 138. The fasteners 138 are realigned to their threaded receiving holes in the engine block (not shown). In this position the crank sprocket 114, camshaft sprocket 118, and chain 116 are still in the fixed position that is consistent with the correct timing needed. The locking slot 128a and raised boss 128 are clearly visible above fasteners 138. The fasteners 138 may now be advance threaded out of stand-off bosses 104 and threaded into the engine block, securing the bracket 140 and its components to the engine block with the proper positioning and timing relationship present. By supplying fasteners 138 with the cassette 120, the assembler does not have to take the time to acquire and then properly align fasteners 138, instead, the assembler may proceed in tightening the fasteners into the threaded receiving holes of the engine block, making the entire assembly more efficient.

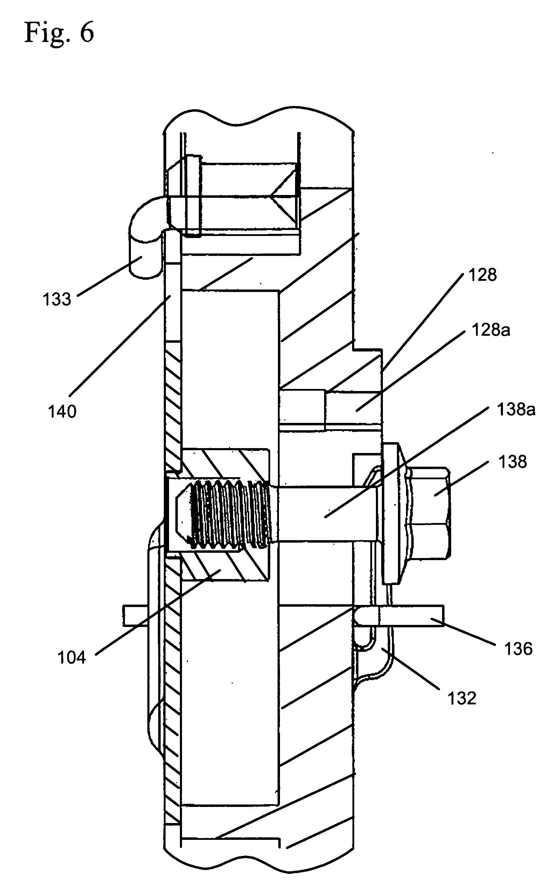

Figure 6 is a cross-section of Figure 5, and shows the relationship of the components when the cassette 120 is in the mounting position and the fasteners 138 have been loosened. As shown, hooks 133 still engage crank sprocket 114, but is no longer associated with tensioner bracket 140, which has moved out of range. Fasteners 138 are now free to be advance threaded out of engagement with the threaded stand-off boss 104 and into engagement with threaded receiving holes in the engine block. The threaded stand-off bosses serve two purposes. The first purpose is allowing the clamping of the tensioner bracket 140 to the cassette 120 in the proper relationship when fasteners 138 are positioned in the locking slot 128a and the fasteners are then tightened against the raised boss 128. The second purpose is to guide fasteners 138 into the correct position when being received and subsequently tightening the tensioner bracket 140 to the engine block. Also shown in the figure is integral catch 132 and how the catch 132 interfaces with locking pin 136 in such a way that as the cassette 120 is removed, locking pin 136 is disengaged from tensioner bracket 140, unlocking and allowing tensioner 108 to engage the chain 116 for tensioning. It should be noted that the threads of the fastener 138 would exit the threaded stand-off boss 104 before they would engage the threads of the engine block (not shown), such that the fastener relieved shank 138a has clearance with the minor thread diameter of boss 104 facilitating finding the threaded hole in the engine block (not shown). Alternatively, the stand-off threaded bosses may be eliminated if the tensioner bracket is threaded and the receiving threads of the engine block are sufficiently recessed.

The first step in using the cassette 120 to install the camshaft drive and timing system is the removal of the assembly, as shipped and stored on a rod in a suspended state via loop 122. The crankshaft sprocket 114 and camshaft sprocket 118 are secured to their respective shafts. The fasteners 138 are then loosened about a half turn (turned counterclockwise) allowing the fasteners 138 to be released from the locking slots 128a and drop into the clearance holes 130, which line up with the receiving holes in the engine block. The fasteners 138 are tightened (turned clockwise) such that they engage the engine block. As the cassette 120 is removed axially, pin 136 engaged by catch 132, which is integral with the cassette, disengages from tensioner bracket 140, unlocking and allowing tensioner 108 to engage the chain 116 for tensioning. The cassette 120 may then be reused. By using the cassette 120 to install the camshaft drive and timing system, the assembler has a free hand available, the cassette is easy to handle by the loop 122, and the timing and placement of the camshaft, crankshaft, tensioner, guide, and slack in the chain is automatically correct.

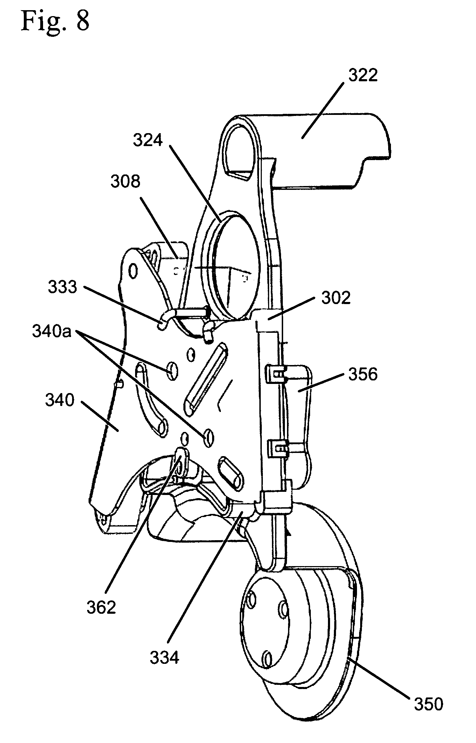

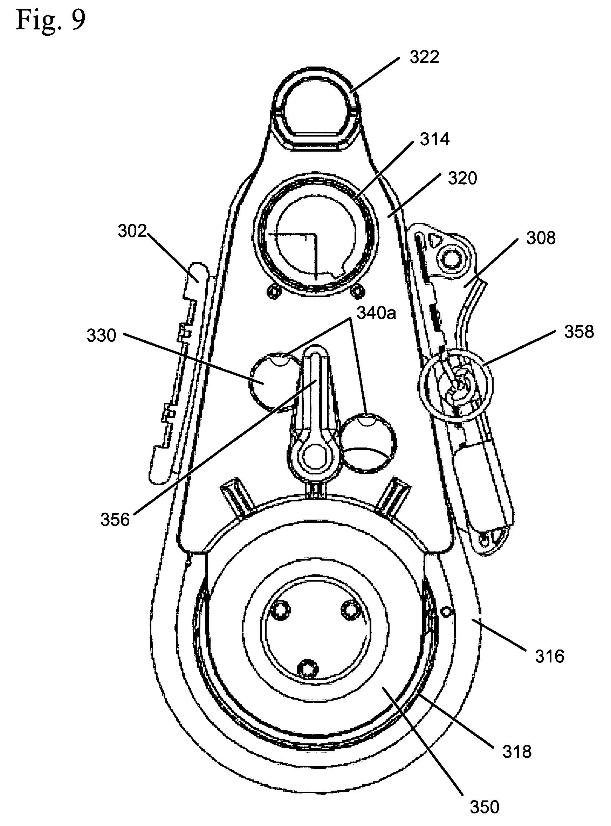

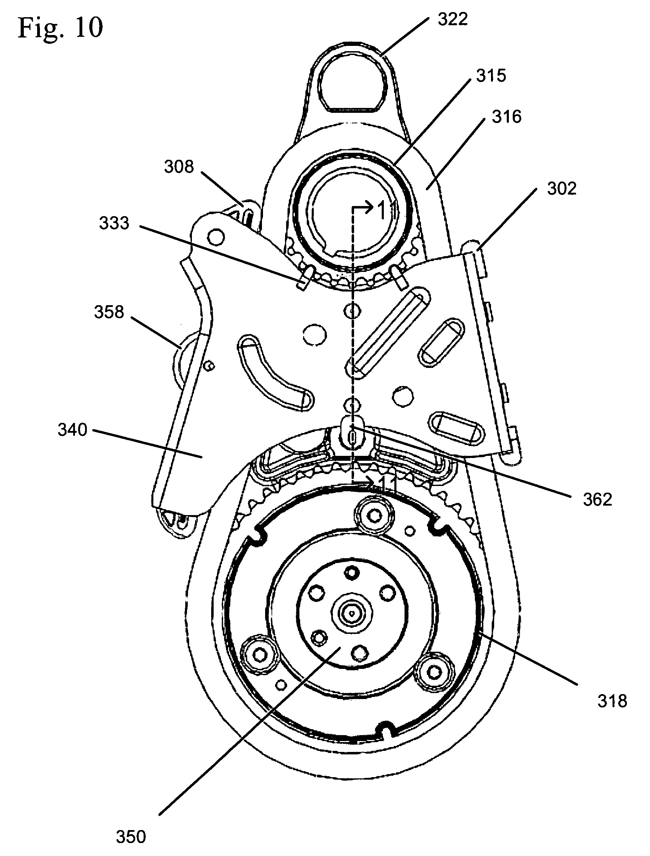

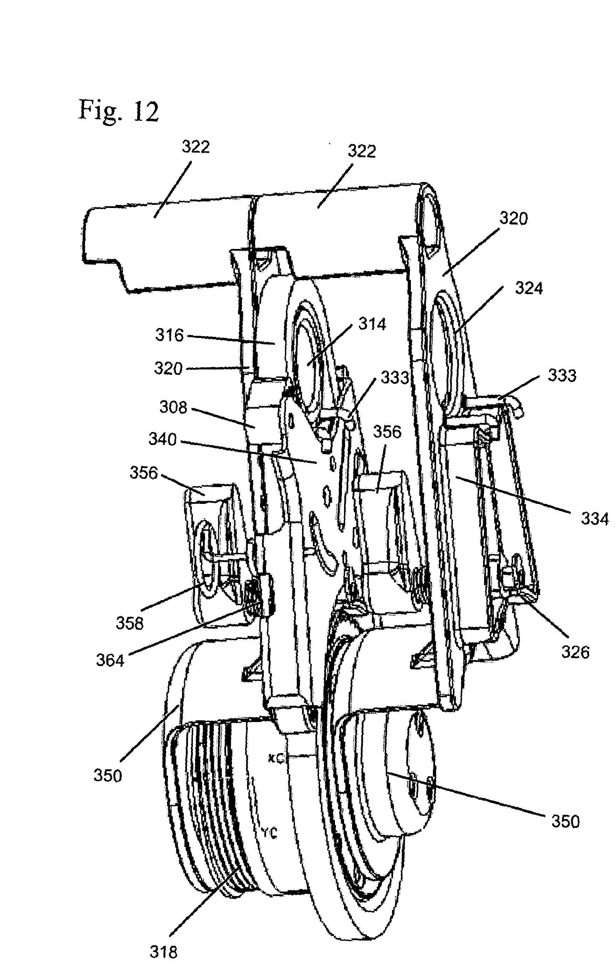

Figures 8, 9, and 10 show an alternative cassette 320 with tensioner bracket 340. The cassette has a loop 322 for storage, shipping, and handling purposes. The cassette 320 also contains a camshaft shield 350 which offers protection to the camshaft sprocket 318 from damage during shipping by an adjacent cassette, as shown in Figure 12, from sagging of the camshaft sprocket 318, and traps fasteners used to secure the camshaft sprocket 318 to its respective shaft on the engine. As in the previous embodiment, the cassette 320 contains shoulder guides 324, 326, 334 for the crankshaft sprocket 314, camshaft sprocket 318, and the chain 116 respectively. The cassette 320 also has two receiving holes 330 slightly off center. Adjacent to the receiving holes 330 is a handle 356 which turns tab 362. Tab 362, as shown in Figure 10 in addition to hooks 333 keep the cassette 320 in contact with the tensioner bracket 340 and in clamped shipping position. A hex nut 360 may be used instead of handle 356. As in the previous embodiment, the crankshaft sprocket 314, camshaft sprocket 318, and chain 316 are all in the fixed position that is consistent with the correct timing. The tensioner 308 is locked into place by pin 358 to keep from exerting any additional force on the chain 316.

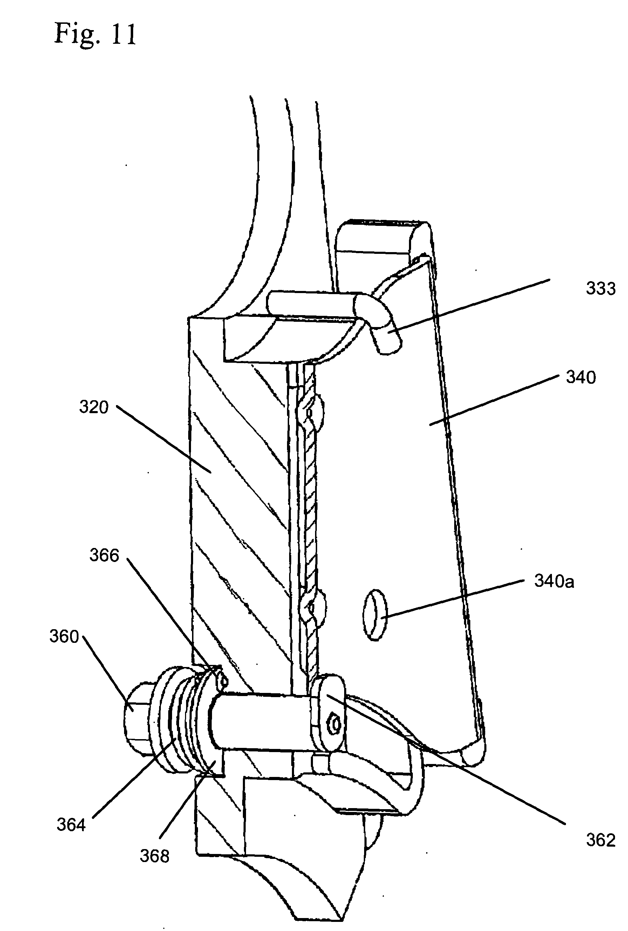

Figure 11 shows cross section of Figure 10. Hex nut 360, which may used in place of handle 356, is adjacent to a spring 364 that pushes on a washer 368 with dimples 366 into their respective holes within the cassette body. The dimples 366 provide resistance to accidental rotation of the handle 356 from its locked position (vertically up) when a force is applied to compress spring 354 if rotated from its respective hole within the cassette. The dimple's snapping into their respective holes also signals to the assembler that the cassette is locked in place. Without the tensioner bracket 340 in place, tab 362 is pulled tight against the back of cassette 320 by spring 364. The assembler must compress spring 364 by pushing on the handle 356 or hex nut 360 to allow tab 362 to be rotated and capture the tensioner bracket 340 between the tab 362 and the cassette 320. The tensioner bracket 340 is positioned between the shaft of tab 362 and hooks 333 while in the shipping position. When tab 362 is rotated out of contact with tensioner bracket 340, spring force retracts tab 362 and its shaft out of the way and allows the tensioner bracket 340 to move away from the crankshaft sprocket 314 vertically downward, aligning the tensioner bracket mounting holes 340a with their respective counterparts in the engine block (not shown).

Similar to the method of installation in the previous embodiment, the first step in using cassette 320 to install the camshaft drive and timing system is removing the cassette 320, which is shipped and stored in a suspended state via loop 322 in the clamped shipping position off of a suspended rod. Then, the crankshaft sprocket 314 and camshaft sprocket 318 are secured to their respective shafts. The camshaft sprocket 318 is secured to its respective shaft using the fasteners that were present with the cassette. By providing these fasteners with the cassette 320, the assembler does not have to take the time to acquire and then properly align the fasteners, instead, the assembler may proceed in tightening and securing the camshaft sprocket 318 to its respective shaft, making the entire assembly more efficient. The handle 356 or hex nut 360 are pressed in and turned clockwise or counterclockwise, moving the tab 362 and releasing the tensioner bracket 340, which causes the tensioner bracket 340 to drop slightly. The slight drop of the tensioner bracket 340 causes the clearance holes 330 and the tensioner bracket mounting holes 340a to line up with the receiving holes in the engine block. Fasteners are applied through mounting holes 340a to secure the tensioner bracket 340 to the engine block (not shown). Pin 358 is removed, allowing the tensioner 308 to move against the chain for tensioning and the cassette 320 is removed axially. The cassette 320 and pin 358 may then be reused. By using the cassette 320 to install the camshaft drive and timing system, the camshaft sprocket as well as other parts of the system are protected during shipment and are positioned for rapid assembly to the engine block, the timing of the system is automatically correct, the cassette is easy to handle by loop 322, and the assembler has a free hand to adjust and maneuver components into place.

Figure 12 shows how cassettes 320 would be stacked and shipped in the clamped sipping position. Cassettes 120 would be stacked together in a similar manner to be shipped and stored.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A cassette for a plurality of components for a cam drive and timing system for an engine the components comprising a guide and a tensioner attached to a tensioner bracket, a chain, a camshaft sprocket, and a crankshaft sprocket, the cassette comprising:
a body defining receiving holes and shoulder guides for placement of the camshaft sprocket, the crankshaft sprocket and the chain; and
at least one fastener engaging the body of the cassette to the tensioner bracket, such that when the body of the cassette is engaged to the tensioner, the chain runs around the camshaft sprocket and the crankshaft sprocket, and the guide and the tensioner are positioned relating to the chain in the same relationship and position as the components are installed on the engine, all components are pivotally placed for installation on the engine.

2. The cassette of claim 1, further comprising a loop integral with the body of the cassette.

3. The cassette of claim 1, wherein the at least one fastener is a pair of hooks or a moveable fastener having an engagement surface.

4. The cassette of claim 3, wherein the moveable fastener having the engagement surface further comprises a head with the engagement surface and a shaft.

5. The cassette of claim 4, wherein the moveable fastener further comprises a tab attached to the shaft.

6. The cassette of claim 5, wherein the tab attached to an end of the shaft is biased by a spring.

7. The cassette of claim 4, wherein the moveable fastener further comprises threads at the end of the shaft.

8. The cassette of claim 1, wherein the components for the cam drive and timing system engaging the cassette are in the correct timing and position.

9. The cassette of claim 1, further comprising a lock slot at a top of the clearance holes.

10. The cassette of claim 1, wherein the tensioner bracket further comprises stand-off threaded bosses at a top of the clearance holes.

11. The cassette of claim 1, further comprising a protection shield for the camshaft sprocket.

12. A method of packing and shipping a cassette for a plurality of components for a cam drive and timing system for an engine the components comprising a guide and a tensioner attached to a tensioner bracket, a chain, a camshaft sprocket, and a crankshaft sprocket, the method comprising the steps of:
a) placing the components for the cam drive and timing system for the engine onto a cassette, the cassette comprising:
a body defining receiving holes and shoulder guides for placement of the camshaft sprocket, the crankshaft sprocket and the chain; and
at least one fastener engaging the body of the cassette to the tensioner bracket, such that when the body of the cassette is engaged to the tensioner, the chain runs around the camshaft sprocket and the crankshaft sprocket, and the guide and the tensioner are positioned relating to the chain in the same relationship and position as the components are installed on the engine, all components are pivotally placed for installation on the engine;
b) shipping the cassette with the components for the cam drive and timing system; and
c) installing the components for the cam drive and timing system using the cassette.

13. The method of claim 12, wherein the components for the cam drive and timing system engaging the cassette are in the correct timing and position.

14. The method of claim 12, wherein the installation of the components for the cam drive and timing system using the cassette comprises the steps of:
a) placing the cassette engaging the cam drive and timing system onto the engine;
b) securing the camshaft sprocket and the crankshaft sprocket to their respective shafts;
c) disengaging the at least one fastener holding the tensioner bracket to the cassette, wherein the cassette drops down, such that clearance holes defined by the cassette line up with receiving holes defined by the engine;
d) securing the remaining components for the cam drive and timing system to the engine;
e) removing a pin from the tensioner, allowing the tensioner to exert pressure on the chain; and
f) removing the cassette from the engine.

15. The method of claim 14, wherein the removal of the cassette from the engine is done axially.

16. A method of installing a plurality of components for a cam drive and timing system for an engine the components comprising a guide and a tensioner attached to a tensioner bracket, a chain, a camshaft sprocket, and a crankshaft sprocket using a cassette, the method comprising the steps of
a) placing a cassette engaging the cam drive and timing system onto the engine, the cassette comprising:
a body defining receiving holes and shoulder guides for placement of the camshaft sprocket, the crankshaft sprocket and the chain; and
at least one fastener engaging the body of the cassette to the tensioner bracket, such that when the body of the cassette is engaged to the tensioner, the chain runs around the camshaft sprocket and the crankshaft sprocket, and the guide and the tensioner are positioned relating to the chain in the same relationship and position as the components are installed on the engine, all components are pivotally placed for installation on the engine;
b) securing the camshaft sprocket and the crankshaft sprocket to their respective shafts;
c) disengaging the at least one fastener holding the tensioner bracket to the cassette, wherein the cassette drops down, such that clearance holes defined by the cassette line up with receiving holes defined by the engine;
d) securing the cam drive and timing system to the engine;
e) removing a pin from the tensioner, allowing the tensioner to exert pressure on the chain; and
f)removing the cassette from the engine.

17. The method of claim 16, wherein the removal of the cassette from the engine is done axially.

18. The method of claim 16, wherein the components for the cam drive and timing system engaging the cassette are in the correct timing and position.
